# EUROPEAN PATENT APPLICATION

(11) **EP 2 878 474 A1**
(43) Date of publication of application: **03.06.2015**
(21) Application number: 14195299.4
(22) Date of filing: 28.11.2014
(51) Int. Cl.: B60K 6/485, B60W 10/02, B60W 10/06, B60W 10/08, B60W 10/113, B60W 10/101, B60W 20/00, F16H 61/66, F16H 61/688

(54) **Power unit, saddle-riding type vehicle and method for controlling a power unit**

(30) Priority: 28.11.2013 JP 2013246637
(71) Applicant: Yamaha Hatsudoki Kabushiki Kaisha, Iwata-shi, Shizuoka 438-8501 (JP)
(72) Inventor: Saitoh, Tetsushi, Iwata-shi, Shizuoka 438-8501 (JP)
(74) Representative: Grünecker Patent- und Rechtsanwälte PartG mbB

(57) **Abstract**

Provided are: engine 6; electric-powered generator 66 with a regeneration function and power running function; a stepped transmission mechanism that shifts transmission of rotational power output from engine 6 and electric-powered generator 66; output shaft 73 that outputs the rotational power as a driving force; first clutch 74 that transmits the rotational power or disconnects the transmission of the rotational power from at least one of engine 6 and electric-powered generator 66 to output shaft 73; and battery 67 that supplies power to electric-powered generator 66 to drive electric-powered generator 66 and that can accumulate power generated by electric-powered generator 66. During the transmission by the transmission mechanism, electric-powered generator 66 is driven to add torque to engine 6 in a direction accelerating synchronization with the rotation of output shaft 73.

## Description

The present invention relates to a power unit to be mounted on a vehicle, preferably to a hybrid power unit driven by a plurality of drive sources, such as internal combustion engines as well as electric motors, and also to a saddle-riding type vehicle including the power unit and a method for controlling a power unit to be mounted on a vehicle.

Conventionally, for an automatic transmission including a plurality of friction engagement apparatuses, during transmission control performed by release and engagement of the friction engagement apparatuses, release-side hydraulic pressure supplied to the friction engagement apparatus on the release side and engagement-side hydraulic pressure supplied to the friction engagement apparatus on the engagement side are optimized to improve the drivability.

An example of a known transmission control apparatus for the automatic transmission of this type is disclosed in Japanese Patent Application Laid-Open No. 2008-144738 (hereinafter, referred to as JP 2008-144738 A). In JP 2008-144738 A, the rotational speed of an input engagement element included in an automatic transmission is temporarily increased by an engine in transmission control during downshift to bring the input shaft rotational speed in the automatic transmission close to the synchronous rotational speed at the end of transmission. In this way, the transmission control apparatus of JP 2008-144738 A reduces the time necessary for the downshift.

Specifically, in JP 2008-144738 A, to increase the torque during the downshift, the generation of power by some of a plurality of cylinders included in an internal combustion engine as a power source is stopped. This reduces the pumping loss in the internal combustion engine, accelerates the increase in the output shaft rotational speed of the power source, and improves the time requirement from the start to the end of the downshift, i.e. transmission responsiveness.

There is a demand for realizing the apparatus that improves the transmission responsiveness, for example, without stopping the generation of power by some of the cylinders, or even if the apparatus is a transmission apparatus without a plurality of cylinders.

An object of the present invention is to provide a power unit to be mounted on a vehicle, a saddle-riding type vehicle including the power unit and a method for controlling a power unit to be mounted on a vehicle that can improve transmission responsiveness to efficiently perform a transmission operation in a short time, regardless of the number of cylinders.

According to the present invention said object is solved by a power unit to be mounted on a vehicle having the features of independent claim 1. Preferred embodiments are laid down in the dependent claims. Furthermore, the present invention also provides a saddle-riding type vehicle comprising such power unit.

Moreover, according to the present invention said object is also solved by a method for controlling a power unit to be mounted on a vehicle having the features of independent claim 11. Preferred embodiments are laid down in the dependent claims.

A power unit according to an aspect is a power unit to be mounted on a vehicle, the power unit including: an internal combustion engine; a power generator connected to a crankshaft of the internal combustion engine, rotating and having a function of electricity regeneration and outputting rotational power by power running, the crankshaft outputting rotational power of the internal combustion engine; a stepless or stepped transmission mechanism that shifts transmission of the rotational power output from at least one of the internal combustion engine and the power generator; and a battery that supplies power to the power generator for power running drive and that is capable of accumulating power generated by the power generator, in which the transmission mechanism includes: an output section that outputs the rotational power toward a driving wheel as a driving force; and a clutch that transmits or disconnects the transmission of the rotational power from at least one of the internal combustion engine and the power generator to the output section, in which during the transmission by the transmission mechanism, the power generator accumulates power in the battery or supplies power from the battery to drive the crankshaft to increase torque of the crankshaft in a direction accelerating synchronization of a rotational speed of the crankshaft with a rotational speed of the crankshaft converted from a rotational speed of the output section based on a reduction ratio set in the transmission mechanism or a target reduction ratio to be set.

### Advantageous Effects of Invention

According to the present invention, the responsiveness during transmission can be improved to efficiently perform a transmission operation in a short time, regardless of the number of cylinders.

### Brief Description of Drawings

FIG. 1 is an external view showing a saddle-riding type vehicle including a power unit of preferred Embodiment 1;
FIG. 2 is a schematic diagram showing an overall configuration of the power unit of preferred Embodiment 1;
FIG. 3 is a block diagram showing a control system of a saddle-riding type vehicle for explaining the power unit of preferred Embodiment 1;
FIG. 4 is a flow chart for explaining an operation of the power unit of Embodiment 1 during transmission;
FIG. 5 is a variation of the flow chart for explaining the operation of the power unit of Embodiment 1 during transmission;
FIG. 6 is a timing chart showing transmission control during shift-up in saddle-riding type vehicle 1 including the power unit of preferred Embodiment 1;
FIG. 7 is a timing chart showing transmission control during shift-down in saddle-riding type vehicle 1 including the power unit of preferred Embodiment 1;
FIG. 8 illustrates a configuration of main parts of a power unit of preferred Embodiment 2; and
FIG. 9 is a timing chart showing transmission control during kickdown in a continuously variable transmission.

### Description of Embodiments

Hereinafter, preferred embodiments will be described in detail with reference to the accompanying drawings.

### (Embodiment 1)

### <Configuration of Saddle-Riding Type Vehicle>

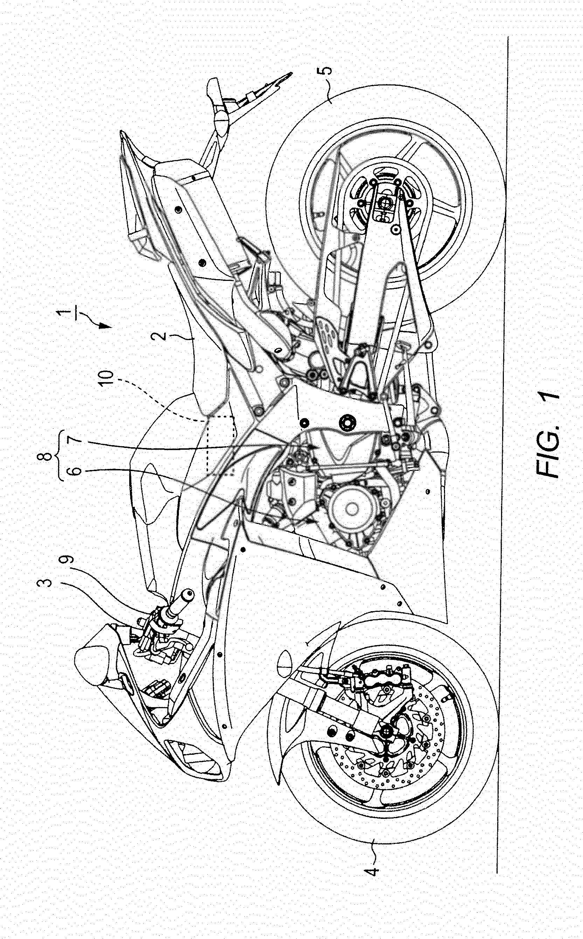

FIG. 1 is an external view showing a saddle-riding type vehicle including a power unit of preferred Embodiment 1.

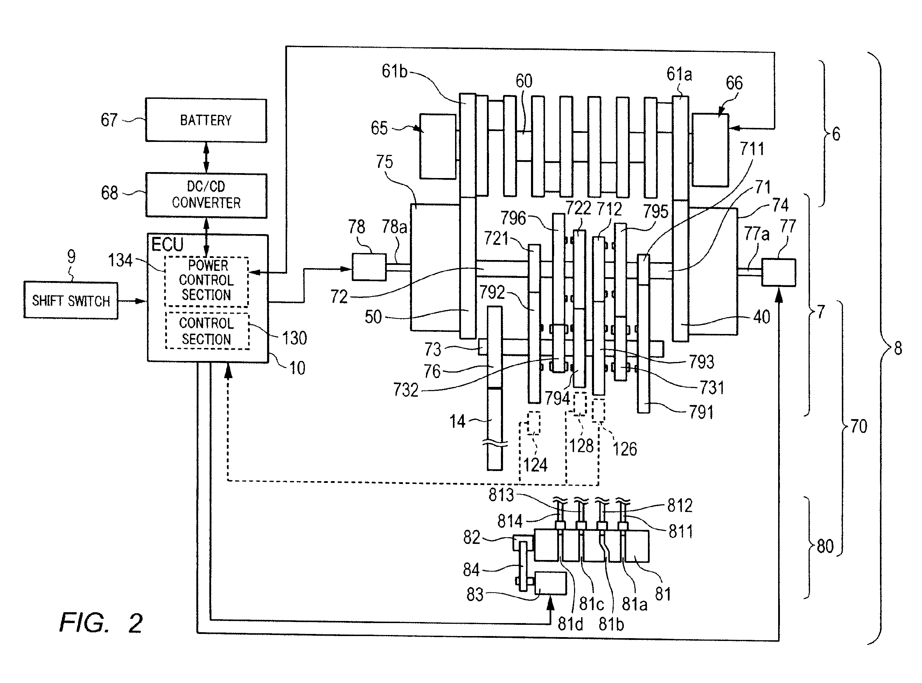

As shown in FIG. 1, saddle-riding type vehicle 1 of Embodiment 1 is a vehicle on which the rider rides straddling seat 2, and is, for example, a motorcycle. Saddle-riding type vehicle 1 of Embodiment 1 will be described as a parallel hybrid motorcycle that drives a driving wheel by switching to at least one of engine 6 and electric-powered generator 66 (see FIG. 2) according to the travel state or the remaining electric power of a battery charged by a power generator.

Saddle-riding type vehicle 1 includes: handle 3; front wheel 4; rear wheel 5; engine unit 8 including engine 6 as an internal combustion engine and power transmission section 7; shift switch (transmission operator) 9; ECU (Engine Control Unit: corresponding to control apparatus (control section)) 10; and the like.

Engine unit 8 is disposed between front wheel 4 and rear wheel 5, and will be described later in details.

Shift switch 9 is provided on handle bar 3, and causes transmission apparatus 70 (see FIG. 2) of engine unit 8 to perform transmission operation when operated by a rider. Shift switch 9 includes a shift-up button and a shift-down button (not shown). When the rider presses the shift-up button, the operation information (shift signal) is output to ECU 10, and transmission apparatus 70 executes a shift-up operation via ECU 10. When the rider presses the shift-down button, the operation information is output to ECU 10, and transmission apparatus 70 executes a shift-down operation through ECU 10.

ECU 10 mainly controls the operation of each unit of saddle-riding type vehicle 1, especially the drive of engine unit 8. Particularly, ECU 10 receives operation information (shift signal) of a transmission operation from shift switch 9 to control transmission apparatus 70 (power transmission section 7 as a transmission mechanism and shift mechanism 80) of engine unit 8. ECU 10 controls transmission apparatus 70 to perform power transmission of transmission gear stages for one engine 6, through friction transmission clutches (first clutch 74 and second clutch 75) in power transmission section 7 and shift mechanism 80. During transmission by transmission apparatus 70, ECU 10 drives and controls electric-powered generator 66 to increase torque in a direction accelerating synchronization of the rotational speed of crankshaft 60 of engine 6 with the rotational speed based on the reduction ratio of transmission apparatus 70 in the rotational speed of output shaft (output section) 73. ECU 10 drives and controls electric-powered generator 66 when first clutch 74 or second clutch 75 is disconnected (released).

The power unit of a preferred embodiment is a unit of elements as power sources of saddle-riding type vehicle 1. The power unit includes engine unit 8 and ECU 10 among the configuration elements of saddle-riding type vehicle 1.

### <Configuration of Power Unit>

FIG. 2 is a schematic diagram showing an overall configuration of the power unit of preferred Embodiment 1.

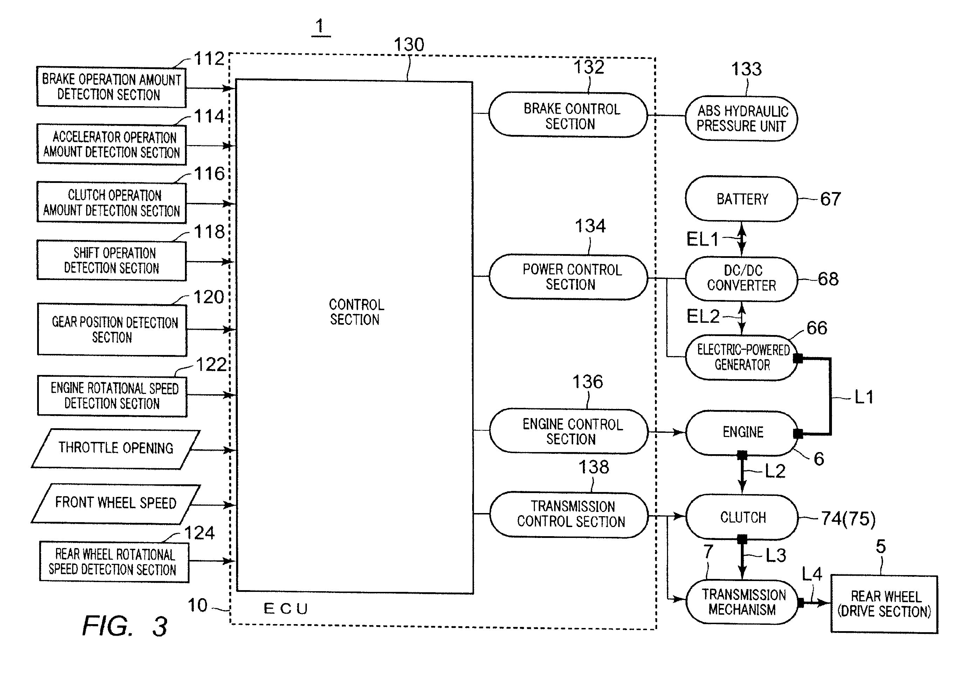

Other than engine 6, engine unit 8 includes a transmission mechanism as power transmission section 7, electric-powered generator 66, battery 67, DC/DC converter 68 (see FIG. 3), clutches (here, first clutch 74 and second clutch 75), and shift mechanism 80. Power transmission section 7 includes a transmission and constitutes transmission apparatus 70 along with shift mechanism 80.

As shown in FIG. 1, a transmission case of power transmission section 7 is connected to a crank case integral with a cylinder block of engine 6. Engine 6 and power transmission section 7 may not be integrated.

Engine 6 is a four-stroke engine that sequentially repeats an intake stroke, a compression stroke, a combustion stoke, and an exhaust stroke. Although not illustrated here, engine 6 includes four cylinders (four cylinders). The cylinders are disposed on the vehicle center surface, or two cylinders are disposed on each side across substantially the center in the left-right direction of engine unit 8. Engine 6 may be an engine including one cylinder or two or more cylinders. Engine 6 includes a cylinder head, a cylinder block, pistons, connecting rods, crankshaft 60 (see FIG. 2), and the like. Pistons are disposed respectively in a reciprocatable manner in four cylinders of the cylinder block of engine 6. The pistons are connected to crankshaft 60 through the connecting rods.

Crankshaft 60 substantially horizontally extends below the cylinder head in a direction (left-right direction) orthogonal to the front-back direction of the vehicle and is disposed in a freely rotatable manner. The center section in the extending direction of crankshaft 60 is positioned at substantially the center in the vehicle width direction.

As shown in FIG. 2, camshaft drive unit 65 and electric-powered generator 66 are connected to the ends of crankshaft 60.

Camshaft drive unit 65 transmits the rotation of crankshaft 60 to an intake-and-exhaust valve drive camshaft (not shown) that drives an intake-and-exhaust valve. Specifically, camshaft drive unit 65 includes: a cam gear (not shown) fixed to a left-side shaft end portion of crankshaft 60; and a cam chain (not shown) wound around the intake-and-exhaust valve drive camshaft (not shown) along with the cam gear. In camshaft drive unit 65, the rotation of crankshaft 60 rotates and drives the cam gear to rotate the intake-and-exhaust drive camshaft through the cam chain. The rotation of the intake-and-exhaust valve drive camshaft opens and closes an intake valve and an exhaust valve. The intake valve is opened and closed in the intake stroke to intake an air-fuel mixture of air and fuel into the cylinder. The exhaust valve is opened and closed in the exhaust stroke to discharge combustion gas.

Electric-powered generator 66 has a regeneration function and a power running function. Specifically, electric-powered generator 66 functions as a power generator that is driven by the rotation of crankshaft 60 to generate (regenerate) power. Electric-powered generator 66 also has a function as an electric motor that is driven by power supplied from battery 67 (see FIG. 3) or the like to provide engine 6 with rotational force (torque) in a rotation direction or a reverse rotation direction of crankshaft 60. The power running function denotes a function in which electric-powered generator 66 serves as an electric motor to provide rotational force (torque) in the rotation direction of crankshaft 60. The torque generated by electric-powered generator 66 will also be called an operation torque of electric-powered generator 66.

Although electric-powered generator 66 is directly connected to crankshaft 60 and disposed on the same axis, the arrangement is not limited to this. Electric-powered generator 66 may be disposed on a different axis with respect to crankshaft 60 and may be connected through a gear. ECU 10 drives and controls electric-powered generator 66.

Specifically, electric-powered generator 66 is a well-known synchronous AC electric motor (brushless DC motor) and includes: a rotor (not shown) fixed to a right-side shaft end portion of crankshaft 60 and rotated along with crankshaft 60; and a stator (not shown) provided on the inner circumference of the rotor.

The rotational force of crankshaft 60 with camshaft drive unit 65 and electric-powered generator 66 provided on left and right shaft end portions is transmitted to output shaft 73 through transmission apparatus 70 and transmitted from output shaft 73 to rear wheel 5 through chain 14 and the like.

Battery 67 supplies power to electric-powered generator 66 for power running drive and accumulates power generated by electric-powered generator 66. Battery 67 is connected to electric-powered generator 66 through DC/DC converter 68. Power control section 134 of control section 130 controls an operation current of DC/DC converter 68. In this way, power control section 134 controls battery 67 through DC/DC converter 68.

Transmission apparatus 70 includes: a transmission mechanism as a power transmission section that varies the rotational speed and the torque transmitted from crankshaft 60 to transmit the rotational speed and the torque toward rear wheel 5; and shift mechanism 80 that performs a variable operation for changing the reduction ratio set in the transmission mechanism (changing operation of transmission gear stages, hereinafter called "gear change").

Transmission apparatus 70 in Embodiment 1 is a dual-clutch transmission apparatus and uses a plurality of clutches (first clutch 74 and second clutch 75) to alternately perform power transmission of transmission gear stages including odd stages and even stages. In this way, transmission apparatus 70 realizes transmission ("shift change") without a break in power transmission when the rotational power (or rotational speed and torque) of engine 6 transmitted from crankshaft 60 is varied and transmitted toward rear wheel 5 (see FIG. 1).

Specifically, in crankshaft 60, crank webs 61 a and 61 b that are external gears are fixed close to electric-powered generator 66 and close to camshaft drive unit 65, respectively.

Crank web 61 a is engaged with first primary driven gear (also called "first input gear") 40 of first clutch 74. Because of this engagement, the power transmitted from crank web 61 a to first input gear 40 is transmitted to first main shaft 71 through first clutch 74.

Crank web 61 b is engaged with a second primary driven gear (also called "second input gear") 50 in second clutch 75. Because of this engagement, the power transmitted from crank web 61 b to second input gear 50 is transmitted to second main shaft 72 through second clutch 75.

A base end portion of first main shaft 71 is linked to first clutch 74, and a base end portion of second main shaft 72 disposed on the same straight line as first main shaft 71 is linked to second clutch 75.

First main shaft 71 and second main shaft 72 are disposed on a line parallel to crankshaft 60.

As is well known, first clutch 74 and second clutch 75 transmit the power from the engine (crankshaft 60) toward output shaft 73 (first main shaft 71 and second main shaft 72) at a torque capacity according to the degree of coupling of the clutches.

First main shaft 71 is rotated by the rotational power transmitted from crankshaft 60 and outputs the power to output shaft 73 through the transmission gear mechanism of odd stages. Second main shaft 72 is rotated by the rotational power transmitted from crankshaft 60 and outputs the power to output shaft 73 through the transmission gear mechanism of even stages. Output shaft 73 is disposed parallel to crankshaft 60, first main shaft 71, and second main shaft 72 and outputs the driving force to rear wheel (driving wheel) 5 through sprocket 76 provided on an end portion on one side in the extending direction (left-right direction).

Output shaft 73 functions as an output section, and output shaft 73 constitutes part of a power transmission path that continues from first main shaft 71 and second main shaft 72 in power transmission section 7. Therefore, the rotational speed in each section of the power transmission path from first main shaft 71 and second main shaft 72 to output shaft 73 can be regarded as a rotational speed corresponding to the rotational speed of the output section. In the description of Embodiment 1, the rotational speed of output shaft 73 is assumed to correspond to the rotational speed of first main shaft 71 and second main shaft 72 or the rotational speed of passive-side shaft portions (described later) of clutches 74 and 75 connected integrally with first main shaft 71 and second main shaft 72.

First clutch 74 and second clutch 75 here are wet multiple disk clutches configured in the same way.

First clutch 74 and second clutch 75 include: a drive-side shaft portion to which first input gear 40 and second input gear 50 are fixed; and a driven-side shaft portion fixed to first main shaft 71 and second main shaft 72. First clutch 74 and second clutch 75 transmit power from the drive-side shaft portion to the driven-side shaft portion, through frictional force generated by bringing disks connected to the drive-side shaft portion and the driven-side shaft portion into contact with each other. Specifically, the disks connected to the drive-side shaft portion and the driven-side shaft portion in first clutch 74 and second clutch 75 are pressed against each other by clutch springs and pressure plates provided on the clutches. Due to this pressing force, the disks generate frictional force in the circumferential direction on contact surfaces, and the drive-side shaft portion and the driven-side shaft portion are fastened at the torque capacity according to the pressing force to transmit power.

More specifically, based on the fastening degree of the drive-side shaft portion and the driven-side shaft portion, first clutch 74 disconnects (releases) the rotational power transmitted from crankshaft 60 to first main shaft 71 or transmits (engages) the rotational power from crankshaft 60 to first main shaft 71. Second clutch 75 disconnects the rotational power transmitted from crankshaft 60 to second main shaft 72 or transmits the rotational power from crankshaft 60 to second main shaft 72. The disconnection and the transmission of the rotational power from crankshaft 60 to first and second main shafts 71 and 72 in first clutch 74 and second clutch 75 will be called "connection and disconnection".

First clutch actuator 77 linked to the pressure plate through pull-rod 77a performs the connection and disconnection of first clutch 74. ECU 10 (specifically, control section 130) controls the connection and disconnection of first clutch 74 through first clutch actuator 77, and first clutch 74 performs power transmission of odd gear stages including an odd gear (first gear 791, third gear 793, and fifth gear 795) group. Output shaft 73 regulates the movement of first gear 791 and third gear 793 in the axial direction, and first gear 791 and third gear 793 are attached rotatably in the circumferential direction. First main shaft 71 regulates the movement of fifth gear 795 in the axial direction, and fifth gear 795 is attached rotatably in the circumferential direction.

Second clutch actuator 78 linked to the pressure plate through pull-rod 78a performs the connection and disconnection of second clutch 75. ECU 10 controls the connection and disconnection of second clutch 75 through second clutch actuator 78 to perform power transmission of even gear stages including an even gear (second gear 792, fourth gear 794, and sixth gear 796) group. Output shaft 73 regulates the movement of second gear 792 and fourth gear 794 in the axial direction, and second gear 792 and fourth gear 794 are attached rotatably in the circumferential direction. Second main shaft 72 regulates the movement of sixth gear 796 in the axial direction, and sixth gear 796 is attached rotatably in the circumferential direction.

In transmission apparatus 70, shift forks 811 to 814 perform gear shift (selection of gear set that forms the power transmission path) of gears 791 to 796, 711, 712, 721, 722, 731, and 732. The rotation of shift cam 81 in shift mechanism 80 moves shift forks 811 to 814.

In shift mechanism 80, shift forks 811 to 814 are constructed between spline gears 731, 712, 722, 732 and shift cam 81. Shift forks 811 to 814 function as followers with shift cam 81 as a driver, and shift forks 811 to 814 slide and move in the axial direction of first and second main shafts 71 and 72 and output shaft 73 based on the shapes of cam grooves 81 a to 81d of rotating shift cam 81. Due to the slide movement, spline gears 731, 712, 722, and 732 linked to the tip portion move in the axial direction on each shaft inserted to each internal diameter. Spline gears 731, 712, 722, and 732 are coupled by engagement of gear dogs with corresponding gears 791 to 796. In this way, the gear shift of the transmission in transmission apparatus 70 is performed along with the movement of shift forks 811 to 814.

Shift cam 81 rotates around the rotation shaft disposed parallel to first and second main shafts 71 and 72 and output shaft 73. The driving force of motor 83 transmitted to shift cam drive apparatus 82 through power train 84 rotationally drives shift cam 81. This rotation moves at least one of shift forks 811 to 814 in the axial direction of the rotation axis according to the shapes of cam grooves 81 a to 81 d.

ECU 10 starts shift-up or shift-down transmission operation based on a shift signal input from shift switch 9 or based on a shift signal automatically generated in ECU 10 without input from shift switch 9. In the transmission operation, ECU 10 controls first and second clutch actuators 77 and 78 and motor 83 based on the shift signal for commanding shift-up or shift-down.

More specifically, in saddle-riding type vehicle 1 in Embodiment 1, ECU 10 controls and performs a series of transmission operation (hereinafter, called shift change operation) including a gear change operation of disconnecting one of first and second clutches 74 and 75 or both of clutches 74 and 75 and rotating shift cam 81 to change the transmission gear stages set in transmission apparatus 70 (shift-up operation or shift-down operation for changing the reduction ratio selected in power transmission section 7) and including an operation of reconnecting clutches 74 and 75 to complete the transmission, in a predetermined order and amount of control set in advance in ECU 10.

The mechanical system of the power unit has been described so far along with the mechanical system of saddle-riding type vehicle 1. A control system of the power unit will be described next along with a control system of saddle-riding type vehicle 1.

FIG. 3 is a block diagram showing main parts of the control system of the saddle-riding type vehicle for explaining the power unit according to preferred Embodiment 1. In FIG. 3, thick lines L1 to L4 denote paths of mechanically connected mechanical power, and arrow lines EL1 and EL2 denote paths of electrically connected electric power.

The power unit in saddle-riding type vehicle 1 includes brake operation amount detection section 112, accelerator operation amount detection section 114, clutch operation amount detection section 116, shift operation detection section 118, gear position detection section (reduction ratio detection section) 120, engine rotational speed detection section (engine speed detection section) 122, rear wheel rotational speed (rear wheel speed) detection section (output speed detection section) 124, control section 130 that is part of ECU 10, brake control section 132, power control section 134, engine control section 136, and transmission control section 138.

Brake operation amount detection section 112 detects the brake operation amount of the rider and outputs information indicating the brake operation amount to control section 130.

Accelerator operation amount detection section 114 detects the accelerator operation amount of the rider and outputs information indicating the accelerator operation amount to control section 130.

Clutch operation amount detection section 116 detects the clutch operation amount of the rider and outputs information indicating the clutch operation amount to control section 130.

Shift operation detection section 118 detects the shift operation of the rider through shift switch 9 and outputs a transmission command including the detected information, i.e. information indicating the transmission instruction (request) of the rider, to control section 130. Specifically, shift operation detection section 118 detects the press of the shift-down button or the shift-up button in shift switch 9 and outputs information indicating a change request (shift-up request or shift-down request) of the transmission gear stages requested by the rider to control section 130.

Gear position detection section 120 detects information indicating the gear position (shift position) and outputs the information to control section 130. Specifically, gear position detection section 120 is a phase angle sensor that detects the phase angle of shift cam 81 in shift mechanism 80. Gear position detection section 120 corresponds to a reduction ratio detection section.

Engine rotational speed detection section 122 detects the rotational speed of crankshaft 60 indicating the engine rotational speed (engine rotational speed) and outputs the detected rotational speed (engine rotational speed) of crankshaft 60 to control section 130.

Engine rotational speed detection section 122 functions as a sensor that detects the rotational speed of crankshaft 60 and that detects the phase of crankshaft 60. Engine control section 136 controls the engine described later based on the phase of crankshaft 60 detected by engine rotational speed detection section 122. Power control section 134 controls the current wave of electric-powered generator 66 that is a synchronous AC electric motor (brushless DC motor) based on the phase of crankshaft 60 detected by engine rotational speed detection section 122.

Engine rotational speed detection section 122 further computes the rotational speeds of the drive-side shaft portions on the upstream in the power transmission path of first clutch 74 and second clutch 75 based on first and second primary reduction ratios set in first input gear 40 and second input gear 50.

Rear wheel rotational speed detection section 124 is, for example, a vehicle speed sensor. Rear wheel rotational speed detection section 124 detects the rotational speed of the rear wheel, i.e. rotational speed of output shaft 73, and outputs the rotational speed to control section 130.

Based on a command value input from control section 130, brake control section 132 suppresses sliding of the wheels caused by braking in the running on a low-friction road, through ABS (Antilock Brake System) hydraulic pressure unit 133. Brake control section 132 has a function of transmitting information indicating the control state and the control history of the brake to control section 130.

As shown in FIGS. 2 and 3, power control section 134 is electrically connected to electric-powered generator 66 and DC/DC converter 68 connected to battery 67.

Power control section 134 controls the current and the voltage of electric-powered generator 66 based on a command value input from control section 130. Power control section 134 controls the current and the voltage of electric-powered generator 66, including the power output from battery 67 to electric-powered generator 66 through DC/DC converter 68 and the power regenerated from electric-powered generator 66 to battery 67 through DC/DC converter 68.

In this way, power control section 134 controls the torque (power running assistance and power absorption) generated by electric-powered generator 66. The torque for power running assistance here is torque that acts to drive electric-powered generator 66 for power running assistance of crankshaft 60 in the same direction as the rotation direction of crankshaft 60 to increase the rotational speed of crankshaft 60. Meanwhile, the torque for power absorption (corresponding to regenerative absorption) is torque that acts to drive electric-powered generator 66 by the rotation of crankshaft 60 to put a load on the rotation of crankshaft 60 to reduce the rotational speed of crankshaft 60. Therefore, the torque for power absorption is torque that absorbs the rotational speed of crankshaft 60. Power control section 134 controls the torque for power absorption in electric-powered generator 66 to absorb the torque of crankshaft 60 to reduce or increase the torque absorption. Power control section 134 also monitors input/output current and remaining electric power of battery 67 through DC/DC converter 68. Power control section 134 has a function of communicating information indicating the remaining electric power of battery 67 and the control state of electric-powered generator 66 with control section 130.

Engine control section 136 controls the drive of engine 6. Engine control section 136 here has a function of communicating information indicating the drive state of engine 6 with control section 130. Engine control section 136 operates a throttle valve, an injector, an ignition plug, and the like based on command values input from control section 130 to control the drive state of engine 6. Therefore, engine control section 136 controls the drive state of engine 6 to control the torque generated by engine 6.

Transmission control section 138 controls the transmission operation (shift change) in transmission apparatus 70 based on a command value input from control section 130 and outputs the driving force to rear wheel 5 that is a driving wheel. Specific control of the transmission operation (shift change) in transmission apparatus 70 here is connection and disconnection control of two clutches 74 and 75 and control of gear change operation by shift mechanism 80. Transmission control section 138 has a function of communicating information indicating the connection status of the transmission (specifically, transmission gear stages and two clutches) with control section 130.

Information input from detection sections 112, 114, 116, 118, 120, 124, and the like as well as information of the throttle opening from a throttle opening sensor that detects the throttle valve opening, the front wheel speed from a front wheel speed sensor, and the like are input to control section 130.

Control section 130 determines the positions of shift forks 811 to 814 based on the phase angle of shift cam 81 detected by gear position detection section 120. The determination of the positions of the shift forks denotes determination of the transmission gear stages shifted by shift forks 811 to 814 (set to allow power transmission) and denotes determination of gear positions (shift positions). Therefore, gear position detection section 120 may be called a reduction ratio detection section.

Control section 130 refers to gear ratios (reduction ratios of gears of shift stages stored in advance as specification values of vehicle) corresponding to the determined gear positions (shift positions) to determine the reduction ratios of the gears.

Based on the input information, control section 130 controls the configuration elements of entire saddle-riding type vehicle 1 including the drive of saddle-riding type vehicle 1. Based on the input information, control section 130 generates control commands for cooperative operation of brake control section 132, power control section 134, engine control section 136, and transmission control section 138.

Therefore, based on the generated control commands, control section 130 cooperatively controls ABS hydraulic pressure unit 133 through brake control section 132, controls DC/DC converter 68 and electric-powered generator 66 through power control section 134, controls engine 6 through engine control section 136, and controls clutches 74, 75, and transmission mechanism 7 through transmission control section 138.

Meanwhile, control section 130 receives information indicating the control state and the control history of the brake from brake control section 132 and receives information indicating the remaining electric power of battery 67 and the control state of electric-powered generator 66 from power control section 134. In addition, control section 130 receives information indicating the control state of engine 6 from engine control section 136 and receives information indicating the connection status of the transmission (specifically, transmission gear stages and two clutches) from transmission control section 138. Based on the input information, control section 130 always recognizes the state of the vehicle to drive rear wheel 5 that is a driving wheel by one or both of engine 6 and electric-powered generator 66 or to drive electric-powered generator 66 for regenerative braking.

In this way, control section 130 controls and switches the control target to at least one of engine 6 and electric-powered generator 66 according to the travel state and the remaining electric power of battery 67 charged by the power generator and controls the driving force including decelerating force in rear wheel (driving wheel) 5 along with the engine control.

Particularly, control section 130 controls power control section 134 to drive (power absorption) electric-powered generator 66 by the rotation of crankshaft 60. In this way, load torque is applied to the rotation of crankshaft 60, and the rotational speed of crankshaft 60 is reduced. Control section 130 controls the power generation. Through power control section 134, control section 130 also uses the supply power from battery 67 to drive (power running assistance) electric-powered generator 66 (specifically, rotor) directly connected to crankshaft 60 to add assisting torque in the rotation direction of crankshaft 60. Specifically, control section 130 applies power running assistance to crankshaft 60 through electric-powered generator 66 in the same direction as the rotation direction of crankshaft 60 to increase the rotational speed of crankshaft 60.

Through these controls, control section 130 controls power control section 134 during transmission based on the input information to drive electric-powered generator 66. In this way, through power control section 134, control section 130 causes electric-powered generator 66 to increase the torque of the drive-side shaft portion on the upstream of the clutches (closer to engine 6), in the direction accelerating the synchronization with the rotational speed of the shaft portion on the downstream of the clutches. In this case, the direction of the torque added to crankshaft 60 by electric-powered generator 66 is a direction decelerating crankshaft 60 during the acceleration of the vehicle or a direction accelerating crankshaft 60 during the deceleration of the vehicle. In other words, the torque provided to crankshaft 60 by the drive of electric-powered generator 66 during the transmission is torque in the opposite direction of the acceleration or deceleration of the vehicle. Therefore, during the transmission, control section 130 controls electric-powered generator 66 through power control section 134 to add the torque to crankshaft 60 in the direction in which the rotational speed of crankshaft 60 converges to the downstream rotational speed.

The shaft portion on the downstream of the clutches is a passive-side shaft portion of clutches provided integrally with the main shaft on the downstream of the clutches that are actual power transmissions. The rotational speed of the shaft portion on the downstream of the clutches is a speed proportional to the vehicle speed and is converted by a reduction ratio set in the transmission mechanism or a target reduction ratio to be set. The rotational speed corresponds to the rotational speed in crankshaft 60 to be synchronized. The targeted transmission gear ratio (target transmission gear ratio) is a transmission gear ratio suitable for constant-speed traveling of the vehicle at the target vehicle speed, and in this case, both of the drivability and the fuel efficiency of the vehicle may be realized.

One of the directions accelerating the synchronization of rotation with the shaft portion on the downstream of the clutches is a direction increasing the rotational speed of engine 6 (crankshaft 60) during transmission (shift-down) with a large reduction ratio in the transmission. The increase in the rotational speed of engine 6 (specifically, crankshaft 60) is performed by reducing the power generation in the state that power control section 134 causes engine 6 to function as electric-powered generator 66 or by driving engine 6 (specifically, crankshaft 60) by causing engine 6 to function as an electric motor. Therefore, in the shift-down during vehicle deceleration, power control section 134 reduces the power generation of electric-powered generator 66 to reduce the load torque or supplies the power from battery 67 to electric-powered generator 66 to perform power running assistance. In this way, the torque in the direction for acceleration (opposite direction of deceleration of vehicle) is added to crankshaft 60 to accelerate the increase in the rotational speed of crankshaft 60, and the synchronization with the rotational speed on the downstream of the clutches is accelerated.

One of the directions accelerating the synchronization with the rotational speed of the shaft portion on the downstream of the clutches is a direction reducing the rotational speed of engine 6 (crankshaft 60) during transmission with a small reduction ratio (shift-up). In this way, the rotational speed of engine 6 (crankshaft 60) is reduced by increasing the power generation in a state that power control section 134 causes engine 6 to function as a power generator. Therefore, in the shift-up during vehicle acceleration, power control section 134 increases the power generation of electric-powered generator 66 to increase the load torque to add torque in the direction for deceleration (opposite direction of acceleration of vehicle) to crankshaft 60. As a result, the reduction in the rotational speed of crankshaft 60 is accelerated, and the synchronization with the rotational speed on the downstream of the clutches is accelerated.

In this way, during the transmission, electric-powered generator 66 drives crankshaft 60 to increase the torque of crankshaft 60 in the direction accelerating the synchronization of the rotational speed of crankshaft 60 with the rotational speed in crankshaft 60 converted from the rotational speed of output shaft 73, based on the accumulation of power in battery 67 or the supply of power from battery 67. The rotational speed in crankshaft 60 converted from the rotational speed of output shaft 73 is converted from the rotational speed of output shaft 73 based on the reduction ratio set in the transmission mechanism (power transmission section 7 and shift mechanism 80). The reduction ratio set in the transmission mechanism may be a target reduction ratio to be set in the transmission mechanism. During the transmission, electric-powered generator 66 may synchronize the rotational speed of crankshaft 60 with the rotational speed in crankshaft 60 converted from the rotational speed of output shaft 73 section based on the reduction ratio after the transmission.

During the transmission, control section 130 starts controlling electric-powered generator 66 when the operation (gear change operation) of changing the reduction ratio selected in power transmission section 7 is finished. This means that the control is performed in a state that the gear dogs in spline gears 731, 712, 722, and 732 are engaged and in a state that the connection of the clutch (first clutch 74 or second clutch 75) for transmitting power is incomplete. Therefore, control section 130 controls the drive of electric-powered generator 66 after the completion of the gear change operation, until the rotational speed of the drive-side shaft portion closer to engine 6 (upstream of clutches) is synchronized with the rotational speed of the shaft portion on the downstream of clutches (closer to output section).

In this case, control section 130 controls the drive of electric-powered generator 66 regardless of the input of a transmission command from shift switch 9 through shift operation detection section 118.

Control section 130 obtains rotational speed R in the drive-side shaft portion on the upstream of transmission apparatus 70 (closer to engine 6) in the transmission path of the drive force, from the rear wheel rotational speed detected by rear wheel rotational speed detection section 124 (corresponding to rotational speed of output section) and the reduction ratio in transmission apparatus 70 determined based on the gear position detected by gear position detection section 120. The rotational speed of engine 6 detected by engine rotational speed detection section 122 controls the torque of electric-powered generator 66 in a specific direction (direction of R).

The control of electric-powered generator 66 by control section 130 during transmission may be performed in advance based on information input to control section 130, before the completion of the gear change operation (movement of gears 731, 712, 732, and 722 and coupling of gear dogs caused by the rotation of shift cam 81) after a transmission command is input. Therefore, before the completion of the gear change operation, control section 130 may start controlling electric-powered generator 66 during transmission when the clutch (first clutch 74 or second clutch 75) that has been transmitting power until the start of the transmission operation is disconnected. This control will be called preceding control.

Specifically, the preceding control by control section 130 uses the rotational speeds of the output section, first main shaft 71, and second main shaft 72 detected by rear wheel rotational speed detection section 124, first main shaft rotational speed detection section 126, and second main shaft rotational speed detection section 128, the reduction ratio in transmission mechanism 70 corresponding to the phase angle of shift cam 81 detected by gear position detection section 120, and the transmission command from shift switch 9 through shift operation detection section 118.

From the information, control section 130 obtains rotational speed (rotational speed of drive-side shaft portion) R2 after the gear change operation on the upstream of the transmission mechanism (closer to engine 6) in the transmission path of the driving force. Control section 130 then controls the torque of electric-powered generator 66 in a direction in which the rotational speed of crankshaft 60 detected by engine rotational speed detection section 122 is R2. In this way, control section 130 can start the control (preceding control) when the clutch (first clutch 74 or second clutch 75) that has been transmitting power until the start of the shift change operation (series of transmission operation) is disconnected, before the completion of the gear change operation (movement of gears 731, 712, 732, and 722 and coupling of gear dogs caused by the rotation of shift cam 81).

Control section 130 may include a transmission command generation section that automatically generates and inputs a transmission command for transmission mechanism 7 based on information other than the information of shift switch 9. More specifically, the transmission command generation section automatically generates a transmission command for transmission mechanism 7 based on information other than the information of shift switch 9, not based on the operation of shift switch 9 by the rider, and inputs the transmission command to control section 130. As in the case in which the transmission command is input from shift switch 9 through shift operation detection section 118, control section 130 that has received the transmission command obtains rotational speed (rotational speed of drive-side shaft portion) R2 after the gear change operation on the upstream of the transmission mechanism (closer to engine 6) in the transmission direction of the driving force based on the transmission command automatically generated by the transmission command generation section. Control section 130 then controls the torque of electric-powered generator 66 in a direction in which the rotational speed of engine 6 detected by engine rotational speed detection section 122 is R2. More specifically, electric-powered generator 66 adds torque to crankshaft 60 in the direction in which the rotational speed of crankshaft 60 converges to the rotational speed after the transmission. In this way, control section 130 can perform the preceding control when the clutch (first clutch 74 or second clutch 75) that has been transmitting the power until the start of the transmission operation is disconnected, before the gear change operation (movement of gears 731, 712, 732, and 722 and coupling of gear dogs caused by the rotation of shift cam 81) is completed.

### <Operation in Power Unit during Transmission>

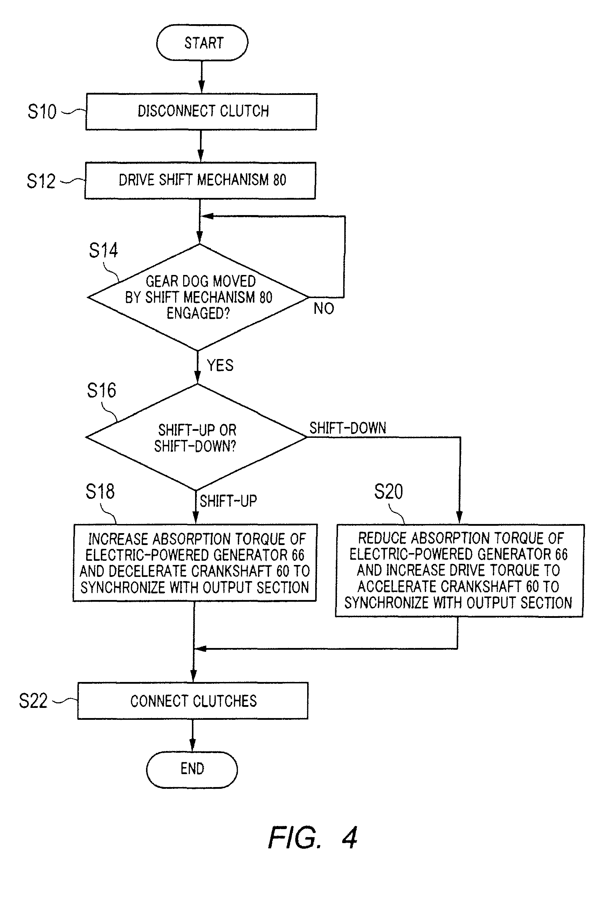

FIG. 4 is a flow chart for explaining operation of the power unit of Embodiment 1 during transmission.

A description will be given of control started when the gear change operation is finished, or specifically, control in the state that the gear dogs in spline gears 731, 712, 722, and 732 are engaged and the clutch (first clutch 74 or second clutch 75) that transmits power after the transmission is not connected.

When the drive of saddle-riding type vehicle 1 is started by ignition, information is input to ECU 10 and control section 130 of the engine unit all the time during the drive as described below, and processes according to the input are executed all the time.

As shown in FIG. 3, the front wheel speed sensor (not shown) inputs front wheel rotational speed ("front wheel speed") to control section 130, and rear wheel rotational speed detection section 124 inputs rear wheel rotational speed ("rear wheel speed") to control section 130. Engine rotational speed detection section 122 inputs the engine rotational speed to control section 130, and first main shaft rotational speed detection section 126 and second main shaft rotational speed detection section 128 (see FIG. 2) input the rotational speeds of the first main shaft and the second main shaft to control section 130. An accelerator position sensor that detects the accelerator operation of the rider inputs the accelerator operation amount (accelerator opening) to control section 130, and the throttle opening sensor inputs the throttle opening in engine 6 to control section 130. Gear position detection section 120 inputs the gear position (shift position) to control section 130. Control section 130 determines the reduction ratio in transmission apparatus 70 from the input gear position.

Control section 130 mainly refers to the input engine rotational speed and throttle opening to calculate the engine torque output to crankshaft 60 by engine 6.

At the same time, control section 130 refers to the control state of electric-powered generator 66 to calculate power generator torque to calculate crankshaft torque (total torque of engine torque and power generator torque in crankshaft 60) output as drive torque from crankshaft 60.

Control section 130 also refers to the reduction ratio stored in advance as a specification value of the vehicle corresponding to the gear position determined from the phase angle of shift cam 81. Control section 130 uses the crankshaft torque and the reduction ratio to calculate drive shaft (shaft of rear wheel 5) torque.

When a transmission command is input to control section 130, control section 130 generates a control command for transmission performed by mainly cooperatively operating power control section 134, engine control section 136, and transmission control section 138 based on the input information and commands the control sections to execute transmission operation shown in FIG. 4.

In step S10, control section 130 executes a clutch disconnection process based on the input information. The clutch disconnection process is a process through transmission control section 138 for reducing the transmission torque capacity of one of first clutch 74 and second clutch 75 transmitting power to a level corresponding to the torque output by engine 6 and disconnecting the other clutch not transmitting power (reducing the transmission torque capacity to zero).

In step S12, control section 130 drives shift mechanism 80 (see FIG. 2) of transmission apparatus 70 through transmission control section 138 based on the input information. In this way, the spline gear is moved in gear change operation for enabling power transmission of the next transmission gear stage corresponding to the input transmission command.

In step S14, control section 130 determines whether the gear dog of the moved spline gear is engaged (whether power transmission of the next transmission gear stage is possible) based on the input information.

If the gear dog is engaged, the process moves to step S16, and control section 130 determines one of shift-up and shift-down based on the transmission command value from shift switch 9. More specifically, in step S16, control section 130 determines whether the reduction ratio of the transmission gear stages set in transmission mechanism 7 by the shift change (transmission) is greater (shift-down) or smaller (shift-up) after the transmission compared to before the transmission. The process in step S16 is after the determination of previous step S14. The determination of shift-up and shift-down in step S16 is performed after the completion of the gear change operation.

The process moves to step S18 for the shift-up, i.e. transmission in which the reduction ratio is reduced by the shift change in step S16. The process moves to step S20 for the shift-down, i.e. transmission in which the reduction ratio is increased by the shift change.

In step S18, control section 130 controls the drive of electric-powered generator 66 through power control section 134 to increase the absorption torque of electric-powered generator 66 to decelerate crankshaft 60. In this way, the rotational speed of crankshaft 60 (closer to engine 6) is synchronized with the rotational speed of the output section.

Specifically, in step S18, control section 130 drives electric-powered generator 66 to reduce the rotational speed on the upstream of the clutch (crankshaft 60) that transmits power after the transmission to synchronize the rotational speed with the output section (rotational speed of the main shaft side part synonymous with the rotational speed of output shaft 73). More specifically, control section 130 causes electric-powered generator 66 to synchronize the rotational speed of the drive-side shaft portion connected to crankshaft 60 in the clutch that transmits power after the transmission with the rotational speed of the driven-side shaft portion connected to the main shaft portion.

In step S20, control section 130 controls the drive of electric-powered generator 66 through power control section 134 to reduce the absorption torque of electric-powered generator 66 or perform power running to output the assisting torque to accelerate the rotation of crankshaft 60. In this way, the rotational speed on the upstream of the clutch (crankshaft 60) is synchronized with the output section (specifically, rotational speed of main shaft side part).

Specifically, in step S20, control section 130 drives electric-powered generator 66 to increase the rotational speed on the upstream of the clutch (crankshaft 60) that transmits power after the transmission to synchronize the rotational speed with the rotational speed of the output section (rotational speed of the main shaft side part on the downstream of the clutch synonymous with the rotational speed of output shaft 73). More specifically, control section 130 causes electric-powered generator 66 to synchronize the rotational speed of the drive-side shaft portion connected to crankshaft 60 in the clutch that transmits power after the transmission with the rotational speed of the driven-side shaft portion connected to the main shaft portion.

In step S22, control section 130 connects the clutches (first clutch 74 and second clutch 75) through transmission control section 138 and ends the transmission operation. The connection of the clutches gradually increases and maximizes the transmission torque capacity of the clutches. The series of processes is repeated in the transmission during the drive of saddle-riding type vehicle 1.

In this way, the transmission responsiveness can be improved, and the transmission operation (shift change operation) can be efficiently performed in a short time in Embodiment 1, regardless of the number of cylinders in engine 6.

When the transmission command is input from shift switch 9 through shift operation detection section 118 or from the transmission command generation section in control section 130, control section 130 controls electric-powered generator 66 from the point of the disconnection of the clutch (first clutch 74 or second clutch 75) that has not been transmitting power until the start of the transmission operation after the input of the transmission command. In this way, control section 130 causes the torque to act on crankshaft 60 of engine 6 (upstream of clutches) in the direction accelerating the synchronization with the rotation of the passive-side shaft portion (corresponding to the rotation of the output section) of the clutch that transmits power after the transmission.

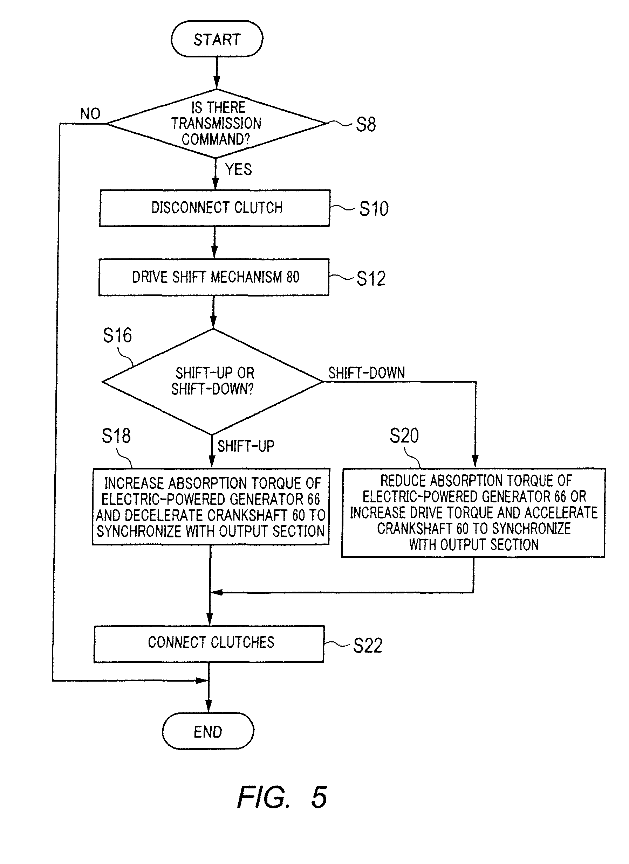

When the operation by control section 130 during transmission is performed based on a transmission command from the rider, control section 130 checks the input of the transmission command before the clutch disconnection of step S10 shown in FIG. 4. Specifically, as shown in FIG. 5, control section 130 determines whether the transmission command is input in step S8. If the transmission command is input in step S8, control section 130 determines one of shift-up and shift-down in step S16 after steps S10 and S12 as in FIG. 4. After the transition to step S16, control section 130 executes the same process as the process of steps S18 and S20 of FIG. 4.

In this way, control section 130 can start the control of the clutch that transmits the power in the next stage to synchronize the rotational speed of crankshaft 60 with the rotational speed of output shaft 73 through electric-powered generator 66, without waiting for the completion of the gear change operation and the determination of the reduction ratio of the next stage. As a result, the synchronization of the rotational speed of the engine 6 side and the rotational speed of the output section side can be further accelerated.

### <Shift-Up Operation>

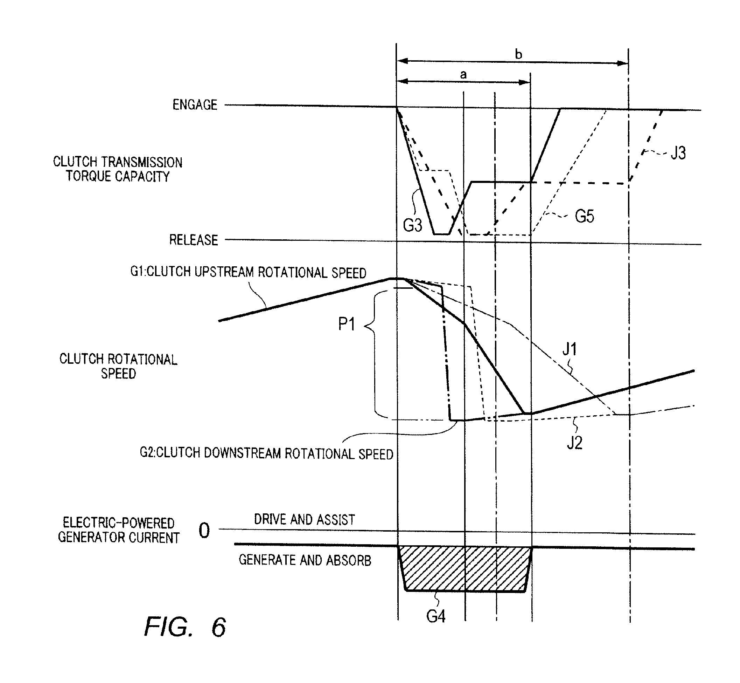

FIG. 6 is a timing chart showing transmission control during the shift-up in saddle-riding type vehicle 1 including the power unit of preferred Embodiment 1. In FIG. 6, changes in the clutch upstream rotational speed and the clutch downstream rotational speed correspond to the clutch torque capacity and the operation torque of electric-powered generator 66 in Embodiment 1 for controlling electric-powered generator 66 during the shift-up transmission.

In FIG. 6, G1 to G4 indicate the clutch upstream rotational speed (rotational speed of crankshaft 60 indicating the engine rotational speed), the clutch downstream rotational speed, the clutch torque capacity in the clutch connection and disconnection operation (clutch torque capacity of the next stage), and the electric-powered generator current (operation torque of electric-powered generator 66). G5 indicates the torque capacity of the clutch of the previous stage. In FIG. 6, J1 to J3 indicate the clutch upstream rotational speed, the clutch downstream rotational speed, and the clutch torque capacity in the clutch connection and disconnection operation when the control of the present teaching is not applied to electric-powered generator 66 during the transmission.

Clutch upstream rotational speed G1 is a rotational speed of the drive-side shaft portion in the clutches of the previous stage and the next stage, and clutch downstream rotational speed G2 is a rotational speed of the driven-side shaft portion in the clutches of the previous stage and the next stage (corresponding to the rotational speed of output shaft 73).

As indicated by G4 of FIG. 6, the power unit (specifically, control section 130) increases the generated current (generated load) of electric-powered generator 66 during the shift-up transmission compared to the normal control to thereby increase the absorption torque of electric-powered generator 66. In this way, electric-powered generator 66 accelerates the reduction (deceleration) of the rotational speed of crankshaft 60.

In clutch downstream rotational speed (corresponding to the rotational speed of the output section) G2, the clutch is released to decelerate the main shaft (passive-side shaft portion) due to the engagement of the gear of the next stage as indicated by line segment P1. Clutch upstream rotational speed (rotational speed of the drive-side shaft portion) G1 is synchronized with clutch downstream rotational speed (rotational speed of the driven-side shaft portion) G2. Period "a" up to the synchronization is shorter than period "b" up to the synchronization of the number of rotations on the upstream of the clutch with the number of rotations of the downstream when the transmission operation is performed without applying the drive control of electric-powered generator 66 of the embodiment to electric-powered generator 66.

Therefore, the power unit increases the generated current (power generation) of electric-powered generator 66 to cause the torque to act on crankshaft 60 in the direction accelerating the synchronization with the rotational speed on the downstream of the clutch. This can reduce the difference between the rotational speeds on the upstream and the downstream of the clutch to accelerate the synchronization to reduce so-called engine inertia shock of the rider during the transmission. Since synchronization period "a" of the rotational speed of the upstream of the clutch (closer to the engine 6) and the rotational speed of the downstream (closer to the output section) is shorter than synchronization period "b", the transmission period from the release of the clutch (see G5) to the engagement (see G3 and G5) can be reduced to increase the transmission responsiveness.

### <Shift-Down Operation>

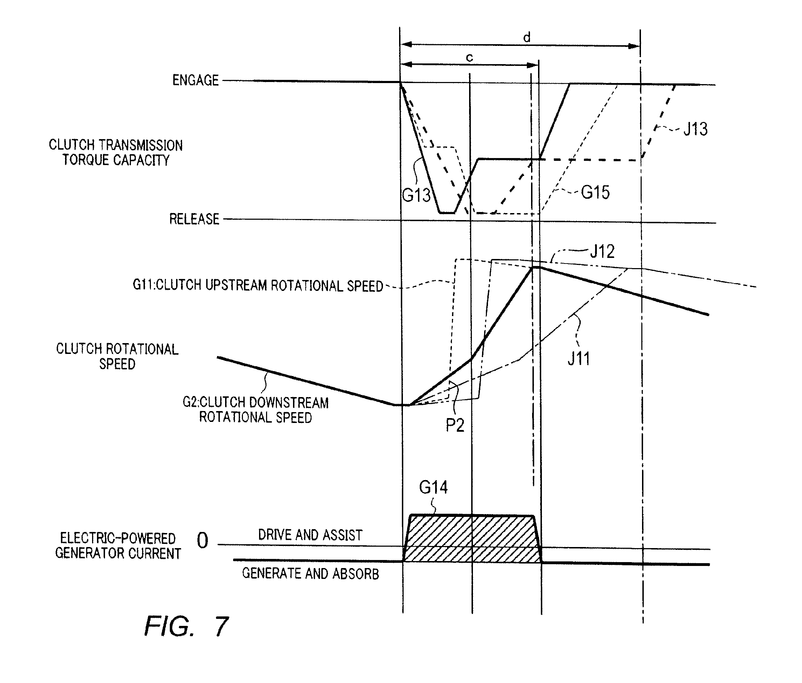

FIG. 7 is a timing chart showing transmission control during shift-down in saddle-riding type vehicle 1 including the power unit of preferred Embodiment 1. In FIG. 7, changes in the clutch upstream rotational speed and the clutch downstream rotational speed correspond to the clutch torque capacity and the operation torque of electric-powered generator 66 in Embodiment 1 for controlling electric-powered generator 66 during the shift-down transmission.

In FIG. 7, G11 to G14 indicate the clutch upstream rotational speed (rotational speed of crankshaft 60), the clutch downstream rotational speed, the clutch torque capacity in the clutch connection and disconnection operation (clutch torque capacity of the next stage), and the electric-powered generator current (operation torque of electric-powered generator 66). G15 indicates the torque capacity of the clutch of the previous stage. In FIG. 7, J11 to J13 indicate the clutch upstream rotational speed, the clutch downstream rotational speed, and the clutch torque capacity in the clutch connection and disconnection operation when the control of the present teaching is not applied to electric-powered generator 66 during the transmission.

Clutch upstream rotational speed G11 is a rotational speed of the drive-side shaft portion in the clutches of the previous stage and the next stage, and clutch downstream rotational speed G12 is a rotational speed of the driven-side shaft portion in the clutches of the previous stage and the next stage (corresponding to the rotational speed of output shaft 73 that is an output section).

As indicated by G14 of FIG. 7, the power unit (specifically, control section 130) reduces the generated current of electric-powered generator 66 during the shift-down transmission to reduce the torque absorption based on the generated load to thereby increase the rotational speed increase degree (acceleration) of crankshaft 60. Alternatively, the power unit supplies drive current from battery 67 to electric-powered generator 66 through DC/DC converter 68 during the shift-down transmission to thereby add power running assisting torque to raise the rotational speed increase (acceleration) of crankshaft 60.

In clutch upstream rotational speed G11, the clutch is released to accelerate the main shaft due to the engagement of the gear of the next stage as indicated by line segment P2, and the rotational speed increases. Clutch upstream rotational speed (rotational speed of the drive-side shaft portion) G11 is synchronized with clutch downstream rotational speed (rotational speed of the driven-side shaft portion) G12. Period "c" up to the synchronization is shorter than period "d" up to the synchronization when the transmission operation is performed without applying the electric-powered generator drive control of the present teaching to electric-powered generator 66.

Therefore, the power unit reduces the generated current (power generation) of electric-powered generator 66 or supplies the drive current to electric-powered generator 66 to cause the torque to act on crankshaft 60 in the direction accelerating the synchronization with the rotational speed on the downstream of the clutch. This can reduce the difference between the rotational speeds on the upstream and the downstream of the clutch to accelerate the synchronization to reduce so-called engine inertia shock of the rider during the transmission. Since synchronization period "c" of the rotational speed of the upstream of the clutch (closer to the engine 6) and the rotational speed of the downstream (closer to the output section) is shorter than synchronization period "d", the transmission period from the release of the clutch (see G15) to the engagement (see G13) can be reduced to increase the transmission responsiveness.

Although the engine unit of Embodiment 1 is used in a dual-clutch transmission including first clutch 74 and second clutch 75, the engine unit may be used in a single-clutch transmission. For example, transmission apparatus 70 with the configuration described above may include only first clutch 74 instead of first clutch 74 and second clutch 75 and only one main shaft instead of first main shaft 71 and second main shaft 72. In this configuration, during the transmission by the transmission mechanism, the power generator drives the crankshaft to increase the torque of the crankshaft in the direction accelerating the synchronization of the rotational speed of the crankshaft with the rotational speed of the output section based on the reduction ratio of the transmission mechanism. In this way, the same effects as the engine unit mounted on saddle-riding type vehicle 1 can be obtained.

### (Embodiment 2)

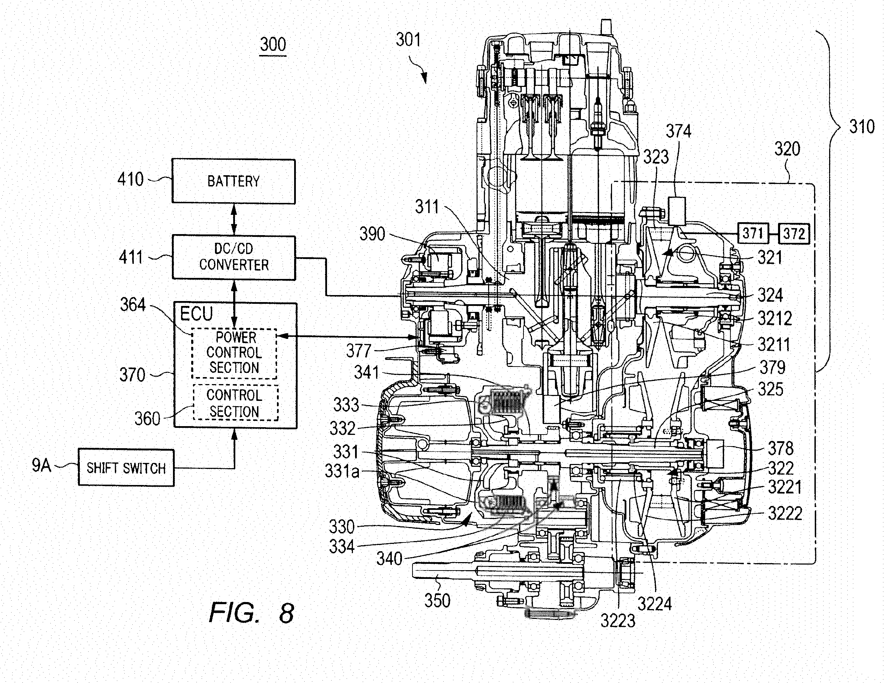

FIG. 8 illustrates a configuration of main parts of power unit 300 of preferred Embodiment 2.

Power unit 300 shown in FIG. 8 includes shift switch (transmission operator) 9A, electronic control apparatus (ECU; Electronic Control Unit, control section) 370, and engine unit 301.

Engine unit 301 includes engine 310 or an internal combustion engine, crankshaft 311 of engine 310, continuously variable transmission (CVT) 320, centrifugal clutch 330, reduction gear 340, output shaft (output section) 350, electric-powered generator 390, battery 410, and DC/DC converter 411.

The drive torque of a vehicle provided with power unit 300 of Embodiment 2 is transmitted in the order of engine 310, electric-powered generator 390, crankshaft 311, continuously variable transmission 320, centrifugal clutch 330, reduction gear 340, and output shaft 350. The drive torque transmitted to output shaft 350 is output from output shaft 350 to a driving wheel (not shown) through a drive pulley, a drive belt, and a driven pulley (not shown).

The rider operates shift switch 9A to cause continuously variable transmission 320 of the engine unit to perform transmission operation. Shift switch 9A includes a shift-up button and a shift-down button (not shown). When the rider presses the shift-up button, the operation information (shift signal) is output to control section 360, and continuously variable transmission 320 executes shift-up operation through control section 360. When the rider presses the shift-down button, the operation information is output to control section 360, and continuously variable transmission 320 executes shift-down operation through control section 360. Engine 310 has the same configuration as engine 6 of Embodiment 1, so that the description thereof will be omitted.

ECU 370 mainly controls operation of each section of saddle-riding type vehicle 1, particularly, drive of engine unit 8. ECU 370 is constituted by, for example, a computation section (microcomputer (MPU)) and a storage section (memory) and includes control section 360, power control section 364, a brake control section, and an engine control section. Particularly, ECU 370 receives the operation information (shift signal) of the transmission operation from shift switch 9, and control section 360 and power control section 364 control continuously variable transmission 320. The brake control section and the engine control section have the same functions as the brake control section and the engine control section of Embodiment 1, so that the description thereof will be omitted.

Battery 410 and DC/DC converter 411 are the same as battery 67 and DC/DC converter 68 of Embodiment 1. More specifically, battery 411 supplies power to electric-powered generator 390 for power running drive and accumulates the power generated by electric-powered generator 390. Battery 410 is connected to electric-powered generator 390 through DC/DC converter 411. Power control section 364 controls battery 410 through DC/DC converter 411.

Crankshaft 311 of engine 310 outputs rotational power of the engine, and electric-powered generator 390 is connected to crankshaft 311.

Electric-powered generator 390 functions as a power generator that is driven by the rotation of crankshaft 311 of engine 310. The generated power can be accumulated in battery 410 through DC/DC converter 411. Electric-powered generator 390 also functions as an electric motor driven by the supply power from battery 410 connected to DC/DC converter 411 and provides torque to crankshaft 311 in the rotation direction or the reverse rotation direction of crankshaft 311.

In this way, electric-powered generator 390 is linked to crankshaft 311 of engine 310 that outputs the rotational power of engine 310 and rotates and thus functions to output the rotational power by regeneration and power running. Power control section 364 of control section 360 controls the operation current of electric-powered generator 390 and DC/DC converter 411.

Continuously variable transmission 320 transmits power from crankshaft 311 that is an output shaft of engine 310 to an input shaft of centrifugal clutch 330. Control section 360 controls the transmission gear ratio of continuously variable transmission 320.

Continuously variable transmission 320 is a belt-type continuously variable transmission including: primary sheave 321 and secondary sheave 322 including a pair of sheave surfaces (conical surfaces) that can relatively move in the axial direction; and V belt 323 wound around primary sheave 321 and secondary sheave 322.

Continuously variable transmission 320 further includes: primary shaft 324 integrated with crankshaft 311; secondary shaft 325 linked to a drive-side shaft portion of centrifugal clutch 330; sheave width adjustment mechanism 371; actuator 372; and sheave position detection sensor 374. Control section 360 controls continuously variable transmission 320.

Primary sheave 321 is disposed on primary shaft 324 that receives the torque generated by engine 310. Secondary sheave 322 is disposed on secondary shaft 325 that inputs the torque to centrifugal clutch 330.

Primary sheave 321 and secondary sheave 322 include: fixed sheaves (3211 and 3212) attached to rotation axes (primary shaft 324 and secondary shaft 325); and movable sheaves (3212 and 3214) that can move in the axial direction on the rotation axes. The conical surfaces (sheave surfaces) of the fixed sheaves and the movable sheaves (3211, 3212, 3221, and 3222) of primary sheave 321 and secondary sheave 322 face each other to form a V groove for winding a belt. V belt 323 is wound around the V groove formed by primary sheave 321 and secondary sheave 322. Hereinafter, fixed sheave 3211 of primary sheave 321 will be called primary fixed sheave 3211, and movable sheave 3212 will be called primary movable sheave 3212. Fixed sheave 3221 of secondary sheave 322 will be called secondary fixed sheave 3221, and movable sheave 3222 will be called secondary movable sheave 3222.

Actuator (electric motor) 372 operates the position of primary movable sheave 3212 in the axial direction through sheave width adjustment mechanism 371. Control section 360 controls the operation of actuator 372. More specifically, control section 360 controls actuator 372 to move primary movable sheave 3212 in the axial direction of primary shaft 324 through sheave width adjustment mechanism 371 to operate the sheave width of primary sheave 321. In this case, the axial direction position of primary movable sheave 3212 is detected by sheave position detection sensor 374 and input to control section 360.

Spring 3223 biases secondary movable sheave 3222 all the time in the direction narrowing down the sheave width. Spring 3223 extends in the axial direction of secondary shaft 325, and one end portion is abutted to a spring receiving seat fixed to secondary shaft 325 to dispose spring 3223 in a compressed state. Torque cam mechanism 3224 is disposed between a shaft base portion of secondary fixed sheave 3221 and a shaft base portion of secondary movable sheave 3222. The action of torque cam mechanism 3224 biases secondary movable sheave 3222 in the direction narrowing down the sheave width according to the drive torque transmitted from V belt 323 to secondary sheave 322.

Therefore, secondary movable sheave 3222 is biased in the direction narrowing down the sheave width by biasing force (hereinafter, called clamp force) that is a total of the biasing force due to the repulsive force of compressed spring 3223 and the biasing force that acts according to the drive torque input to secondary sheave 322 in torque cam mechanism 3224.

Secondary movable sheave 3222 moves to a position where the force received from V belt 323 according to the movement of primary movable sheave 3212 and the clamp force are balanced.

Torque cam mechanism 3224 increases the clamp force by acting to increase the force for biasing secondary movable sheave 3222 in the direction narrowing down the sheave width when the drive torque transmitted from V belt 323 to secondary sheave 322 is greater. In this way, torque cam mechanism 3224 increases the contact frictional force between V belt 323 and primary sheave 321 and between V belt 323 and secondary sheave 322 to increase the torque capacity that can be transmitted by continuously variable transmission 320. Torque cam mechanism 3224 further acts to reduce the clamp force when the drive torque transmitted from V belt 323 to secondary sheave 322 is small or when the drive torque is deceleration torque (engine brake state). In this way, torque cam mechanism 3224 reduces the transmission loss caused by the contact frictional force between V belt 323 and primary sheave 321 and between V belt 323 and secondary sheave 322. Therefore, torque cam mechanism 3224 has a function of increasing the torque capacity that can be transmitted in continuously variable transmission 320 and a function of reducing the transmission loss in continuously variable transmission 320.

In this way, V belt 323 transmits the rotational driving force between primary sheave 321 and secondary sheave 322. V belt 323 moves primary movable sheave 3212 in the axial direction of primary shaft 324. As a result, the sheave width (groove width of V groove) of primary sheave 321 is changed, and secondary movable sheave 3222 is moved in the axial direction of secondary shaft 325 to a position where the clamp force is balanced, thereby changing the sheave width (groove width of V groove) of secondary sheave 322. In this way, the transmission gear ratio of continuously variable transmission 320 is changed.

Sheave width adjustment mechanism 371 moves primary movable sheave 3212 in the axial direction to adjust the width of the sheave in primary sheave 321. Actuator 372 drives sheave width adjustment mechanism 371. Actuator 372 moves and controls primary movable sheave 3212 to adjust the width of the sheave in primary sheave 321.

Centrifugal clutch 330 transmits or disconnects the transmission of the rotational power from at least one of engine 310 and electric-powered generator 390 to output shaft 350. Centrifugal clutch 330 includes clutch housing 331 (input shaft of centrifugal clutch 330), clutch boss 332 (output shaft of centrifugal clutch 330), clutch weight 333, a clutch plate, a friction disk, and a clutch disk.

Since the basic configuration of centrifugal clutch 330 is a well-known art, the basic configuration will be described briefly. Clutch housing 331 is fixed to secondary shaft 325 of continuously variable transmission 320 and rotates along with secondary shaft 325. Clutch boss 332 is fixed to drive gear 341 that includes secondary shaft 325 inserted therein and rotates along with drive gear 341. The clutch plate, the friction disk, and the clutch disk are disposed between clutch housing 331 and clutch boss 332.

Centrifugal clutch 330 transmits and outputs the torque input to the input shaft (clutch housing 331 here) to the output shaft (clutch boss 332 here) through the clutch plate, the friction disk, and the clutch disk. In centrifugal clutch 330, clutch weight 333 starts to be displaced in the circumferential direction according to an increase in the centrifugal force acting on clutch weight 333 after an increase in the rotational speed of clutch housing 331. Clutch weight 333 is abutted to pressing cam portion 331 a provided on clutch housing 331 to convert the centrifugal force acting on clutch weight 333 into thrust in the rotational axis direction. The converted thrust acts as pressing force for pressing the clutch plate, and frictional force is generated on the friction disk and the clutch disk. The torque is transmitted between clutch housing 331 and clutch boss 332 according to the size of the frictional force. When the centrifugal force acting on clutch weight 333 is reduced by a decrease in the rotational speed of clutch housing 331 that is an input shaft, the thrust in the rotation axis direction acting as pressing force on the clutch plate is also reduced. When the clutch plates are separated by the force of return spring 334 compressed and incorporated between the clutch plates, the frictional force does not act between the friction disk and the clutch disk, and the transmission of torque between clutch housing 331 and clutch boss 332 is cut off (released).

Power unit 300 here includes sheave position detection sensor 374 of continuously variable transmission 320, various sensors, such as an accelerator position sensor (APS), a throttle position sensor (TPS, not shown), engine rotational speed sensor 377, secondary shaft rotational speed sensor 378, and output shaft rotational speed sensor (vehicle speed sensor) 379, and shift switch 9A.

Sheave position detection sensor 374, various sensors, such as the accelerator position sensor, throttle position sensor 376, engine rotational speed sensor 377, secondary shaft rotational speed sensor 378, and output shaft rotational speed sensor (vehicle speed sensor) 379, and shift switch 9A are connected to control section 360. Signals output from various sensors 374, 376 to 379, and shift switch 9A are input to control section 360. Therefore, a large amount of vehicle information, specifically, information of various states of the motorcycle and necessary information for the request of the rider, is input from a large number of sensors attached to the vehicle to control section 360.

Of these, throttle position sensor 376 is a sensor that detects the throttle opening. Engine rotational speed sensor (engine rotational speed detection section) 377 detects the rotational speed of crankshaft 311 (primary shaft 324) and detects the phase of crankshaft 311. Based on the phase of crankshaft 311 detected by engine rotational speed sensor 377, the engine control section controls the fuel injection and ignition of the engine, and power control section 364 controls the current wave of electric-powered generator 390 that is a synchronous AC power generator (brushless DC motor).

Control section 360 that drives and controls continuously variable transmission 320 will be described in detail here.

Control section 360 uses the rotational speeds of the shafts detected by engine rotational speed (primary shaft rotational speed) sensor 377, secondary shaft rotational speed sensor 378, and output shaft rotational speed sensor (vehicle speed sensor) 379 to compute an effective transmission gear ratio in continuously variable transmission 320 and a slip ratio in clutch 330. The effective transmission gear ratio is computed by dividing the rotational speed of primary shaft 324 corresponding to the engine rotational speed by the rotational speed of secondary shaft 325 corresponding to the vehicle speed. Control section 360, or specifically, transmission control section 368, uses the effective transmission gear ratio in continuously variable transmission 320 and the slip ratio in clutch 330 to control the transmission gear ratio set in continuously variable transmission 320.

In control section 360, for example, a transmission map is set in advance in a memory based on various travel modes during traveling, in which the transmission map is for setting a target transmission gear ratio that serves as a control target based on the vehicle speed, the engine rotational speed, the throttle opening, and the like. Control section 360 follows the transmission map to set the target transmission gear ratio that serves as a control target based on the information of the actual vehicle speed and throttle opening and drives sheave width adjustment mechanism 371 through actuator 372 to change the transmission gear of continuously variable transmission 320.

During the transmission, control section 360 changes the transmission gear ratio of continuously variable transmission 320 and refers to the effective transmission gear ratio in continuously variable transmission 320 to drive (power absorption) electric-powered generator 390 based on the rotation of crankshaft 311. In this way, torque (generated load) in the direction for deceleration is applied to crankshaft 311, and the rotational speed of crankshaft 311 is reduced.

During the transmission, control section 360 supplies power from battery 410 to electric-powered generator 390 through DC/DC converter 411 and power control section 364 to drive (drive in an assisting manner) electric-powered generator 390. In the drive in an assisting manner, torque in the direction for acceleration is added to crankshaft 311 to increase the rotational speed of crankshaft 311. Specifically, electric-powered generator 390 drives crankshaft 311 in an assisting manner by torque in the same direction as the rotation direction of the crankshaft to increase the rotational speed of the cranks shaft.

During the transmission, control section 360 drives (power absorption or assistance drive) electric-powered generator 390 based on the target transmission gear ratio and the effective transmission gear ratio of continuously variable transmission 320 as well as input information to cause the drive to act on the drive-side shaft portion (here, crankshaft 311 integrated with primary shaft 324) on the upstream in the power transmission path in continuously variable transmission 320.

In this way, electric-powered generator 390 applies, based on the accumulation of power in battery 410 or the supply of power from battery 410, torque to primary shaft 324 through crankshaft 311 in the direction accelerating the synchronization of the rotational speed of the drive-side shaft portion (primary shaft 324) on the upstream with the rotational speed of the driven-side shaft portion (secondary shaft 325) on the downstream in the power transmission path of continuously variable transmission 320.

The direction accelerating the synchronization with the rotational speed of the driven-side shaft portion on the downstream in the power transmission path is a direction increasing the rotational speed of engine 310 in the transmission (shift-down) with a large reduction ratio (transmission gear ratio) in continuously variable transmission 320. The increase in the rotational speed of engine 310 is performed by reducing the power generation with engine 310 functioning as electric-powered generator 390 or by driving engine 310 by causing engine 310 to function as an electric motor.

The direction accelerating the synchronization with the rotational speed of the driven-side shaft portion on the downstream in the power transmission path is a direction reducing the rotational speed of engine 310 in the transmission (shift-up) at a low reduction ratio (transmission gear ratio). In this way, the rotational speed of engine 310 is reduced by increasing the power generation with engine 310 functioning as a power generator.

Control section 360 controls electric-powered generator 390 during the transmission when a transmission command is input from shift switch 9A and in so-called kickdown operation based on a quick opening operation of the accelerator opening by an accelerator operator (not shown).

The kickdown operation denotes an operation of sudden shift-down during acceleration, as in re-acceleration.

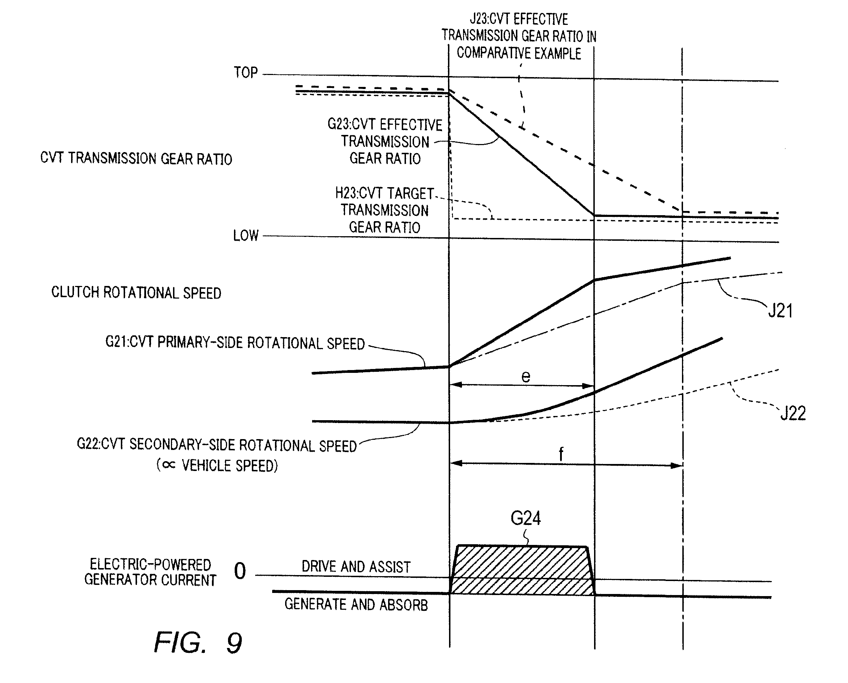

FIG. 9 illustrates change in the rotational speeds of primary shaft 324 and secondary shaft 325 in the kickdown transmission by continuously variable transmission 320.

H23 shown in FIG. 9 is a target transmission gear ratio set in continuously variable transmission (CVT) 320 by control section 360 in the kickdown operation. G23 indicates change in the effective transmission gear ratio of CVT when power unit of Embodiment 2 controls electric-powered generator 390 in the kickdown operation. Meanwhile, J23 indicates change in the effective transmission gear ratio of CVT when the kickdown operation is performed in the same way without applying the drive control of the present teaching to electric-powered generator 390, i.e. change in Comparative Example.

G21 and G22 indicate change in the rotational speeds of primary shaft 324 and secondary shaft 325 when the power unit of Embodiment 2 controls electric-powered generator 390 in the kickdown operation. G21 indicates the rotational speed of primary shaft 324 which will be called CVT primary-side rotational speed (crankshaft rotational speed). G22 indicates rotational speed of secondary shaft 325 which will be called CVT secondary-side rotational speed (vehicle speed). Meanwhile, J21 and J22 indicate change in the rotational speeds on the engine side and the output section side when the kickdown operation is performed in the same way without applying the drive control of the present teaching to electric-powered generator 390. Specifically, J21 indicates the primary-side rotational speed in Comparative Example, and J22 indicates the secondary-side rotational speed (vehicle speed) in Comparative Example.

G24 indicates change in the electric-powered generator current (electric-powered generator torque) when the power unit of Embodiment 2 controls electric-powered generator 390 in the kickdown operation.

As indicated by G24 of FIG. 9, to perform the shift-down by changing the CVT transmission gear ratio from top to low, electric-powered generator 390 reduces the power absorption load or performs the assistance drive to increase the acceleration of crankshaft 311 and primary shaft 324.

More specifically, the acceleration of crankshaft 311 is increased in the direction accelerating the synchronization with the rotational speed of primary shaft 324 by reducing the power generation of electric-powered generator 390 or by driving electric-powered generator 66 in an assisting manner to thereby reduce the gap between the target transmission gear ratio and the effective transmission gear ratio to accelerate the synchronization. This can reduce so-called engine inertia shock of the rider during the transmission. Transmission period "e" from top to low is shorter than transmission period "f" in which the drive control of the present teaching is not applied to electric-powered generator 390, and the transmission responsiveness can be increased.

### Industrial Applicability

The power unit and the saddle-riding type vehicle including the power unit according to the present teaching have an advantageous effect of improving transmission responsiveness to efficiently perform a transmission operation in a short time, regardless of the number of cylinders, and are useful in a motorcycle.

### Reference Signs List

1 Saddle-riding type vehicle
2 Seat
3 Handle bar
4 Front wheel
5 Rear wheel
6, 310 Engines
7 Power transmission section
8 Engine unit
9 Shift switch
10, 370 ECUs (control apparatuses, control sections)
40 First input gear
50 Second input gear
60 Crankshaft
65 Camshaft drive unit
66, 390 Electric-powered generators
67, 410 Batteries
68, 411 DC/DC converters
70 Transmission apparatus
71 First main shaft
72 Second main shaft
73, 350 Output shafts (output sections)
74 First clutch
75 Second clutch
77 First clutch actuator
78 Second clutch actuator
80 Shift mechanism
81 Shift cam
82 Shift cam drive apparatus
83 Motor
84 Power train
112 Brake operation amount detection section
114 Accelerator operation amount detection section
116 Clutch operation amount detection section
118 Shift operation detection section
120 Gear position detection section
122 Engine rotational speed detection section
124 Rear wheel rotational speed detection section
130, 360 Control sections
134, 364 Power control sections
136 Engine control section
138 Transmission control section
300 Power unit
320 Continuously variable transmission
321 Primary sheave
322 Secondary sheave
323 V belt
324 Primary shaft
325 Secondary shaft
330 Centrifugal clutch
340 Reduction gear
371 Sheave width adjustment mechanism
372 Actuator

## Claims

1. A power unit to be mounted on a vehicle, the power unit comprising:
an internal combustion engine (6,310);
a crankshaft (60,311) configured for outputting rotational power of the internal combustion engine (6,310);
a power generator (66,390) connected to the crankshaft (60,311) of the internal combustion engine (6,310), the power generator (66,390) is configured for a function of electricity regeneration and for outputting rotational power by power running drive,
a stepless or stepped transmission mechanism (70,320) configured to shift transmission of the rotational power output from at least one of the internal combustion engine (6,310) and the power generator (66,390); and
a battery (67,410) configured to supply power to the power generator (66,390) for power running drive and configured for accumulating power generated by the power generator (66,390), wherein
the transmission mechanism (70,320) comprises:
an output section (73,350) configured to output the rotational power toward a driving wheel (5) as a driving force; and
a clutch (74,75,330) configured to transmit or disconnect the transmission of the rotational power from at least one of the internal combustion engine (6,310) and the power generator (66,390) to the output section (73,350), wherein
during the transmission by the transmission mechanism (70,320), the power generator (66,390) is configured to accumulate power in the battery (67,410) or to supply power from the battery (67,410) to drive the crankshaft (60,311) to increase torque of the crankshaft (60,311) in a direction accelerating synchronization of a rotational speed of the crankshaft (60,311) with a rotational speed of the crankshaft (60,311) converted from a rotational speed of the output section (73,350) based on a reduction ratio set in the transmission mechanism (70,320) or a target reduction ratio to be set.

2. A power unit according to claim 1, wherein the power generator (66,390) is configured to perform power running assistance to increase the rotational speed of the crankshaft (60,311) during shift-down transmission with a large reduction ratio in the transmission mechanism (70,320) and is configured to perform regenerative absorption to reduce the rotational speed of the crankshaft (60,311) during shift-up transmission with a small reduction ratio in the transmission mechanism (70,320) to synchronize the rotational speed of the crankshaft (60,311) with the rotational speed of the crankshaft (60,311) converted from the rotational speed of the output section (73,350) based on the reduction ratio after the transmission.

3. A power unit according to claim 2, wherein the power generator (66,390) is configured to reduce power generation in a regenerative state to reduce torque absorption from the crankshaft (60,311) or is configured to drive the crankshaft (60,311) in an assisting manner by the power from the battery (67,410) in a power running state to increase the rotational speed of the crankshaft (60,311), or
the power generator (66,390) is configured to increase the power generation in a regenerative state to increase torque absorption from the crankshaft (60,311) and thereby reduces the rotational speed of the crankshaft (60,311).

4. A power unit according to any one of claims 1 to 3, wherein the power generator (66,390) is directly connected to the crankshaft (60,311), preferably the power generator (66,390) is disposed coaxially with the crankshaft (60,311).

5. A power unit according to any one of claims 1 to 3, wherein the power generator is disposed on a different axis parallel to the crankshaft and is linked to the crankshaft through a gear or a chain.

6. A power unit according to any one of claims 1 to 5, wherein:
the transmission mechanism (70) comprises transmission gears of a plurality of stages; and
the clutch (74,75) is disposed between the crankshaft (60) and the transmission mechanism (70) in a transmission path of the rotational power to transmit or
disconnect the transmission of the rotational power from the crankshaft (60) to the transmission mechanism (70).

7. A power unit according to any one of claims 1 to 6, wherein the transmission mechanism (320) is a continuously variable transmission, preferably the clutch (330) is disposed between the transmission mechanism (320) and the output section (350).

8. A power unit according to claim 7, further comprising:
an engine rotational speed detection section (377) configured to detect the rotational speed of the crankshaft (311);
an output speed detection section configured to detect the rotational speed of the output section (350); and
a control section (360) configured to control the drive of the power generator (390), wherein
the control section (360) is configured to calculate a target rotational speed in an input section of the transmission mechanism (320) based on the reduction ratio set in the transmission mechanism (320) or the target reduction ratio to be set and based on the rotational speed of the output section (350) and
the control section (360) is configured to control the power generator (390) to add torque to the crankshaft (311) in a direction in which the rotational speed in the input section of the transmission mechanism (320) converted from the rotational speed of the crankshaft (60,311) converges to the target rotational speed.

9. A power unit according to claim 8, wherein the transmission mechanism (320) further comprises at least one of:
a transmission operator (9A) configured to input a transmission command for the transmission mechanism (320); and a transmission command generation section configured to automatically generate and input a transmission command for the transmission mechanism (320) based on information other than the transmission operator, wherein
when the transmission command is input by the transmission operator or the transmission command generation section, the control section (360) configured to set a reduction ratio corresponding to the transmission command as a target reduction ratio and configured to start controlling the power generator (390).

10. A saddle-riding type vehicle comprising the power unit according to any one of claims 1 to 9.

11. Method for controlling a power unit to be mounted on a vehicle, the power unit comprising an internal combustion engine (6,310), a crankshaft (60,311) outputting rotational power of the internal combustion engine (6,310), a power generator (66,390) connected to the crankshaft (60,311) of the internal combustion engine (6,310), the power generator (66,390) functions for electricity regeneration and for outputting rotational power by power running drive, and a battery (67,410) supplying power to the power generator (66,390) for power running drive and for accumulating power generated by the power generator (66,390), wherein
the method comprises:
during the transmission by the transmission mechanism (70,320),
accumulating power in the battery (67,410) or supplying power from the battery (67,410) to drive the crankshaft (60,311) by the power generator (66,390) to increase torque of the crankshaft (60,311) in a direction accelerating synchronization of a rotational speed of the crankshaft (60,311) with a rotational speed of the crankshaft (60,311) converted from a rotational speed of the output section (73,350) based on a reduction ratio set in the transmission mechanism (70,320) or a target reduction ratio to be set.

12. Method for controlling a power unit according to claim 11, further comprising:
performing power running assistance to increase the rotational speed of the crankshaft (60,311) during shift-down transmission with a large reduction ratio in the transmission mechanism (70,320) and
performing regenerative absorption to reduce the rotational speed of the crankshaft (60,311) during shift-up transmission with a small reduction ratio in the transmission mechanism (70,320) to synchronize the rotational speed of the crankshaft (60,311) with the rotational speed of the crankshaft (60,311) converted from the rotational speed of the output section (73,350) based on the reduction ratio after the transmission.

13. Method for controlling a power unit according to claim 12, further comprising:
reducing power generation in a regenerative state to reduce torque absorption from the crankshaft (60,311) or configured to drive the crankshaft (60,311) in an assisting manner by the power from the battery (67,410) in a power running state to increase the rotational speed of the crankshaft (60,311), or
increasing the power generation in a regenerative state to increase torque absorption from the crankshaft (60,311) and thereby reduces the rotational speed of the crankshaft (60,311).

14. Method for controlling a power unit according to claim 13, further comprising:
detecting the rotational speed of the crankshaft (311);
detecting the rotational speed of the output section (350); and
calculating a target rotational speed in an input section of the transmission mechanism (320) based on the reduction ratio set in the transmission mechanism (320) or the target reduction ratio to be set and based on the rotational speed of the output section (350) and
controlling the power generator (390) to add torque to the crankshaft (311) in a direction in which the rotational speed in the input section of the transmission
mechanism (320) converted from the rotational speed of the crankshaft (60,311) converges to the target rotational speed.

15. Method for controlling power unit according to claim 14, further comprising:
inputting a transmission command for the transmission mechanism (320); and automatically generating and inputting a transmission command for the transmission mechanism (320) based on information other than the inputted transmission command, wherein
when the transmission command is input or automatically generated, setting a reduction ratio corresponding to the transmission command as a target reduction ratio and starting controlling the power generator (390).
